# EUROPEAN PATENT SPECIFICATION

(11) **EP 1 795 064 B1**
(45) Date of publication and mention of the grant of the patent: **13.02.2008**
(21) Application number: 05425853.8
(22) Date of filing: 30.11.2005
(51) Int. Cl.: A01D 46/26

(54) **Device for harvesting olives, fruit or the like**
Erntevorrichtung für Oliven, Früchte oder dergleichen
Dispositif pour la récolte d'olives, de fruits ou similaires

(43) Date of publication of application: 13.06.2007
(73) Proprietor: Campagnola S.R.L., 40069 Zola Predosa (Bologna) (IT)
(72) Inventor: Ferretti, Pio Vittorio, 40050 Monte San Pietro (Bologna) (IT)
(74) Representative: Lanzoni, Luciano

(56) References cited:
- EP-A- 1 116 432
- EP-A- 1 323 342
- WO-A-03/030625
- FR-A- 2 125 298
- US-A- 5 437 146

## Description

The present invention relates to a device for harvesting olives, fruit or similar agricultural products, for example almonds, walnuts and the like.

In particular, the present invention relates to a portable device for harvesting olives.

For harvesting many agricultural products and in particular olives, it is customary to use motor-powered portable devices able to shake the branches of plants and cause the fruit to fall or able to "comb" the branches, detaching the fruit from them. Devices of the former type are normally called shakers and usually consist of a hook located at the end of a rod which is made to vibrate by a suitable motor part. The assembly consisting of the rod and relative motor part is supported by the operator, usually by means of a shoulder support, and manually manoeuvred.

In many cases, both depending on the specific type of plant and the actual degree of ripeness of the fruit, the mechanical action of shaking the branches is harmful for the plants or inefficient in terms of harvesting.

Therefore, as an alternative to use of the shaker devices described above, devices of the latter type are used, better known as harvesters, normally comprising two comb-shaped elements which oscillate relative to one another, engaging with the fruit between the respective prongs of each comb and detaching the fruit from the branches.

In practice, the harvesters normally comprise the combs located at the end of a support rod and their movement is driven by a suitable motor part. The assembly consisting of the rod and relative motor part is supported by the operator and manually manoeuvred.

Simplified forms of harvesters have only one comb.

It is known from WO 03/030625 an olive picking beating tool, comprising a rotating shaft which, by a slanted portion inserted in a support, forces a generic plate, integral with the support, into cyclic rocking swinging motion, symmetrical all through 360° rotation of the shaft. The plate supports bars, integral with the plate and which run through a conical path.

The most widespread types of harvesters comprise two flat combs opposite one another which oscillate with an alternating movement about two respective parallel axes. In other words, the two combs oscillate towards and away from one another and, during said movement engage with the foliage of the plants to detach the fruit both by shaking the foliage and, above all, by a raking action which results in traction on each individual fruit.

Use of harvester devices of the known type, although allowing an advantageous reduction in fruit harvesting times compared with manual harvesting, is not without disadvantages.

A first disadvantage is the fact that the alternating movement of the combs creates considerable vibrations which affect the operator holding the device.

Obviously, this latter case is particularly negative since the vibrations transmitted to the operator by the harvester device are not only irritating, but actually harmful after prolonged use. It is important to consider that during harvest periods an operator uses the harvester device all day.

Another disadvantage linked to use of harvester devices of the known type is again linked to the alternating movement of the combs which, being subjected to rapid inversions of direction with consequent considerable accelerations, have a particularly aggressive action on the plants and on the fruit, which may cause unwanted damage to both. Moreover, the considerable accelerations cause a high level of energy absorption by the motor part. The direct consequence of this absorption is, in the common case of a battery-powered motor part, that the batteries rapidly go flat and, therefore, limited harvester device operating autonomy.

The aim of the present invention is to provide a device for harvesting olives, fruit or the like, able to overcome the above-mentioned disadvantages of the known devices, and which is at the same time functional, economical to produce and practical and effective to use.

The technical features of the present invention, in accordance with the above aims, are clear from the content of the claims herein, in particular claim 1 and, preferably, from any of the claims directly or indirectly dependent on claim 1.

The advantages of the present invention are more evident in the detailed description which follows, with reference to the accompanying drawing which illustrates a preferred, non-limiting embodiment of the invention, in which:
- Figure 1 is a perspective view of a device for harvesting olives, fruit or the like in accordance with the present invention;
- Figure 2 is a perspective view with some parts cut away, of a detail of the device illustrated in Figure 1;
- Figure 3 is a schematic cross-section of a detail of the device illustrated in Figure 1;
- Figure 4 is a schematic view of the detail illustrated in Figure 3, according to cross-section IV in Figure 3;
- Figure 5 is a schematic perspective view, with some parts cut away to better illustrate others, of the detail illustrated in Figure 3;
- Figure 6 is a schematic side element view of a detail illustrated in Figure 3;
- Figures 7 to 10 are views of a detail of the device illustrated in Figure 1, in a succession of operating steps.

With reference to the accompanying drawings, the numeral 1 denotes as a whole a portable device for harvesting olives, fruit or the like.

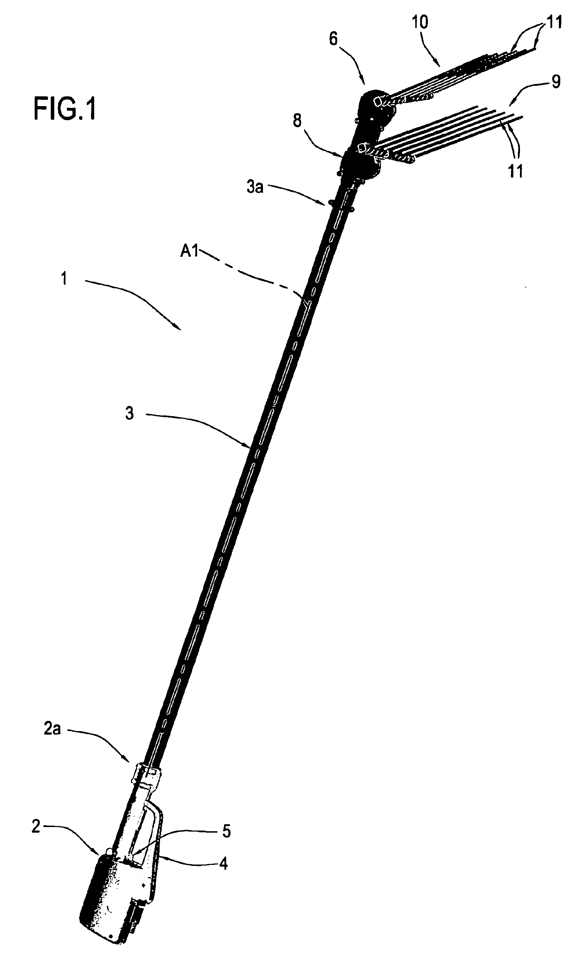

As illustrated in Figure 1, the device 1 comprises a central structure 2 from a first end 2a of which there extends a rod 3 extending according to a longitudinal axis A1.

On the central structure 2 there is a grip 4 which the operator grasps. At said grip 4 there is a push-button 5 for activating the device 1.

As illustrated in Figure 1, at its opposite longitudinal end 3a to the central structure 2, the rod 3 is fitted with an end head 6.

The central structure 2 houses a motor of the known type and not illustrated which is operatively connected to a rotary shaft 7 for transmitting motion from the motor to the end head 6.

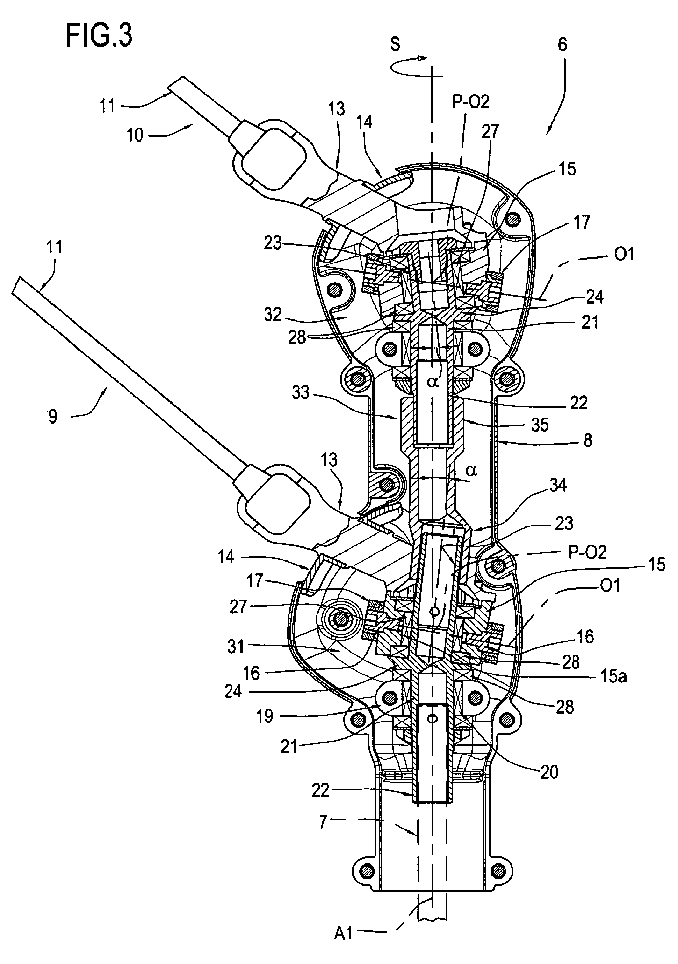

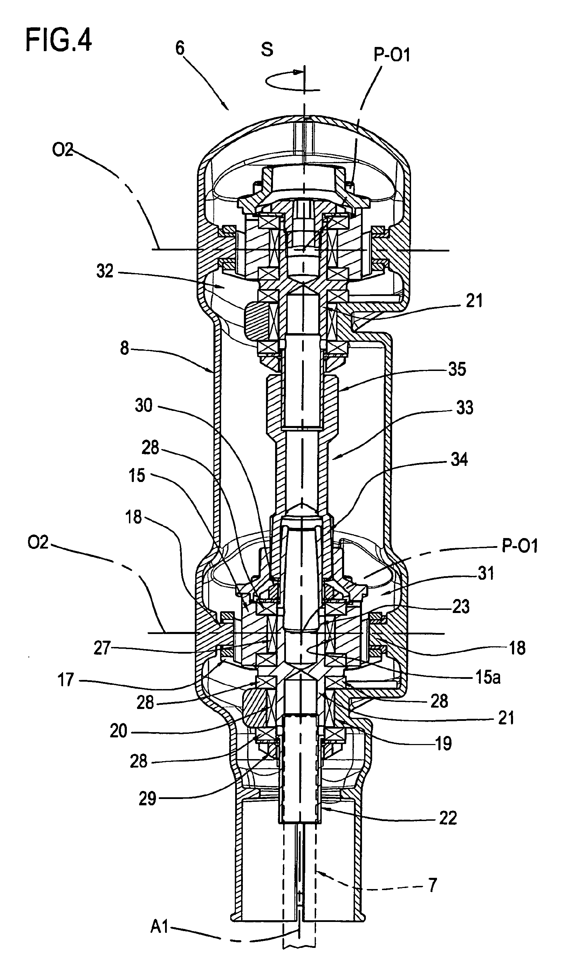

The rotary shaft 7, only partly illustrated, with a dashed line, in Figures 3 and 4, is housed in the rod 3, coaxial with it. The longitudinal axis A1 along which the rod 3 extends forms a respective axis of rotation for the shaft 7.

The embodiment of the device 1 illustrated and described is advantageously equipped with an electric motor, but this may also be substituted, for example, by pneumatic or internal combustion motors. This description refers to the electric motor housed in the central structure 2 without thereby limiting the scope for use of the different types of motors indicated above.

Moreover, the power supply for the electric motor, advantageously but not necessarily provided by batteries housed in a separate portable unit, not illustrated, in no way limits the scope of the invention.

Similarly, the motor, of any type, may be housed in a different portable unit, separate from the structure 2, for example a rucksack, not illustrated, and the rotary motion can be transmitted from the motor to the shaft 7 by a flexible transmission part of the known type, also not illustrated.

The end head 6 comprises a covering guard 8, fixed relative to the rod 3. The guard 8 also acts as a structural support for the parts which make up the head 6.

As described in detail below, at the head 6 there are two mobile combs 9, 10, respectively nearest to and furthest from the central structure 2. The combs 9, 10 comprise respective prongs 11 designed to engage with the above-mentioned olives, fruit or the like to detach them from the plant.

In this description the term engage with also refers simply to the action of dynamic contact between prongs 11 and fruit or localised shaking of the plant close to the fruit; basically, all interactions between the prongs 11 of the comb 9, 10 and the plant or fruit which may detach the latter.

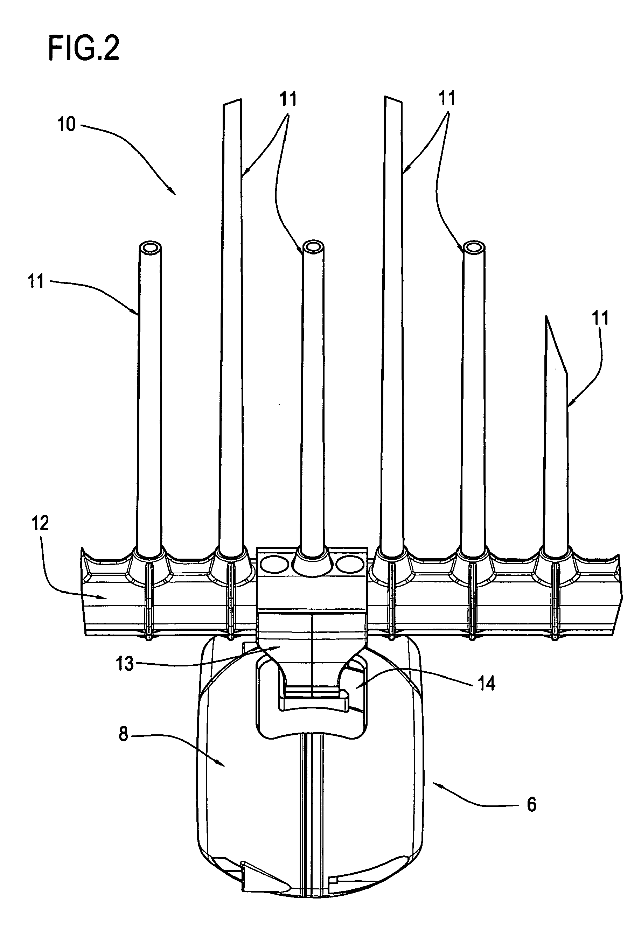

As illustrated in Figure 2, each comb 9, 10 comprises a frame 12 on which the prongs 11 are fixed at a suitable distance from one another. The frame 12 of each comb 9, 10 is connected to a respective arm 13 which emerges from the head 6 guard 8 through windows 14.

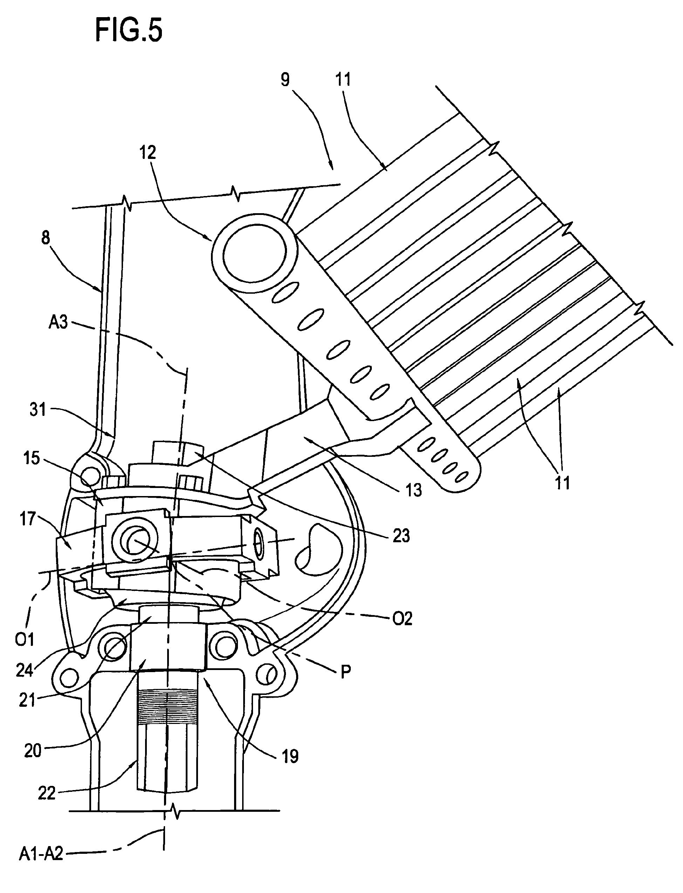

As illustrated in Figures 3 and 5, with particular reference to the nearest comb 9, the arm 13 is fixed rigidly to a support body 15 in which there is a cylindrical through-hole 15a.

The support body 15 pivots, by means of pins 16, at an intermediate support element 17, so that it oscillates relative to the latter about a pivoting axis O1.

The pivoting axis O1 forms a first oscillating axis for the support body 15 and for the relative comb 9 integral with it.

Therefore, hereinafter, the axis O1 will mainly be referred to as the first oscillating axis.

With reference to Figures 4 and 5, the intermediate support element 17 has a substantially quadrangular ring shape and in turn pivots, by means of pins 18, at the guard 8 about a respective pivoting axis O2. The pivoting axis O2 forms a second oscillating axis for the support body 15 and for the relative comb 9 integral with it. When the intermediate support element 17 oscillates about the second axis O2, it also causes oscillation of the support body 15 pivoting at the intermediate element 17.

Therefore, hereinafter, the axis O2 will mainly be referred to as the second oscillating axis.

The second oscillating axis O2 is fixed relative to the head 6 and relative to the rod 3 to which the head 6 is securely fixed, whilst the first oscillating axis O1 oscillates relative to the second axis O2.

As is clearly illustrated in Figure 5, the first and second oscillating axes O1, O2 are incident upon one another at a point P and perpendicular to one another.

As illustrated in Figures 3, 4 and 5, on the guard 8, at a housing 19, a rotary element 21 is rotatably connected by inserting a bearing 20 between them.

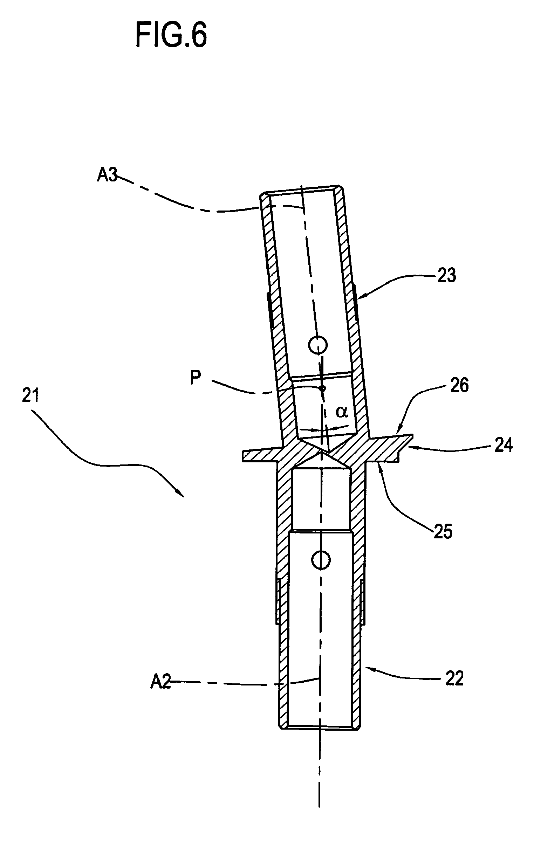

With reference to Figure 6, the rotary element 21 comprises a first, cylindrical lower portion 22 with a central axis A2, and a second, upper portion 23, rigidly connected to the first portion 22. The second portion 23 is also cylindrical and has a central axis A3 set at a predetermined angle α to the central axis of the first portion 22.

The angle α is between 2 and 10 sexagesimal degrees.

Advantageously, in the preferred embodiment illustrated in the accompanying drawings the angle α is equal to approximately 6 sexagesimal degrees.

The rotary element 21 is rotated about the central axis A2 of its first, lower portion 22 by the rotary motion transmission shaft 7 housed in the rod 3. The central axis A2 of the first, lower portion 22 therefore forms an axis of rotation for the rotary element 21. In the embodiment illustrated in the accompanying drawings, said axis of rotation A2 coincides with the axis of rotation A1 of the motion transmission shaft 7.

The rotary element 21 also comprises a ring-shaped central portion 24 with variable thickness, inserted between the first, lower portion and the second, upper portions 22, 23. In other words, the ring-shaped central portion 24 has a first, lower face 25 which is flat and perpendicular to the axis of rotation A2 of the rotary element 21, and a second, upper face 26, also flat but perpendicular to the central axis A3 of the second portion 23 and, therefore, set at an angle to the axis of rotation A2 of the rotary element.

As illustrated in Figures 3, 4 and 5, with the insertion of a rolling bearing 27 between them, the second, upper portion 23 of the rotary element 21 is rotatably inserted in the cylindrical hole 15a in the support body 15. Advantageously, the bearing 27 is of the needle bearing type.

With reference to Figures 3 and 4, respective axial bearings 28 are located in contact with the first, lower and second, upper faces 25 and 26 of the central portion 24.

A first ring nut 29 is fitted on the first, lower portion 22 of the rotary element 21 with an axial bearing 28 inserted between them.

A second ring nut 30 is fitted on the second, upper portion 23 of the rotary element 21 with an axial bearing 28 inserted between them.

The first and second ring nuts 29, 30 axially fix the support body 15 relative to the rotary element 21 and fix the assembly consisting of the latter relative to the housing 19 and, therefore, to the guard 8.

As illustrated in Figure 5, the axis of rotation of the rotary element 21, which coincides with the central axis A2 of the first, lower portion 22, intersects the central axis A3 of the second, upper portion 23 at the point P of intersection between the two oscillating axes O1, O2.

The support body 15, intermediate support element 17, rotary element 21, ring nuts 29, 30, bearings 20, 27, 28, described with reference to the nearest comb 9 together form a first set of equipment 31 for supporting and moving the comb.

Similarly, the furthest comb 10 has a second set of equipment 32 for supporting and moving it, consisting of a support body 15, an intermediate support element 17, a rotary element 21, two ring nuts 29, 30 and respective bearings 20, 27, 28.

Inside the end head 6 and between the two sets of support and movement equipment 31, 32 for the combs 9, 10 there is a joint 33 kinematically connecting the respective rotary elements 21.

The joint 33 is substantially hollow and comprises a lower part 34 which engages with the upper portion 23 of the rotary element 21 of the first set of equipment 31, and an upper part 35 which engages with the lower portion 22 of the rotary element 21 of the second set of equipment 35.

The rotary shaft 7, rotary elements 21, support bodies 15, intermediate support elements 17, arms 13 form respective means 36 for transmission of the motion from the motor to the combs 9, 10 for the device 1.

In embodiments of the present invention not illustrated, the device 1 comprises a rod 3 which is telescopic, so that it can adapt better to specific requirements for different uses.

In practice, the motor referred to but not illustrated drives the rotation of the motion transmission shaft 7 about its axis A1.

The shaft 7 is connected to the lower portion 22 of the rotary element 21 of the first set of equipment 31 and, therefore, rotation of the shaft 7 involves rotation of the rotary element 21 about its own axis of rotation A2.

When the rotary element 21 rotates about its axis A2, the axis A3 of its second, upper portion 23 describes, as the generating line, a cone whose axis corresponds to A2.

During rotation of the element 21, the support body 15 rotatably connected to it oscillates about the oscillating axes O1 and O2.

In other words, during its rotation the element 21 exerts on the support body 15 instantaneous forces which generate respective rotary moments relative to the two oscillating axes O1 and O2.

Said forces are applied by the element 21 on the body 15, by means of the second, flat upper face 26 and the cylindrical upper portion 23, with the insertion of the respective bearings 28 and 27 between them.

Since the comb 9 is rigidly connected to the body 15 by the arm 13, the support body 15 drags the comb 9, causing it to move.

Operation of the first set of equipment for support and movement 31 is described above. Operation of the second set of equipment 32 is substantially similar, considering that the joint 33 transfers rotary motion from the rotary element 21 of the first set of equipment 31 to the rotary element 21 of the second set of equipment 32. Therefore, the comb 10 which is rigidly connected to the body 15 of the set of equipment 32 is dragged by the respective support body 15, causing it to move.

With reference to both sets of equipment 31 and 32, the angle α of inclination of the second, upper portion 23 of the rotary element 21, together with the oscillation constraints which consist of the fulcrums on the first and second oscillating axes O1, O2, transform the rotary movement of the rotary element 21 into elliptical movement, in space, of each point of the comb 9 and 10.

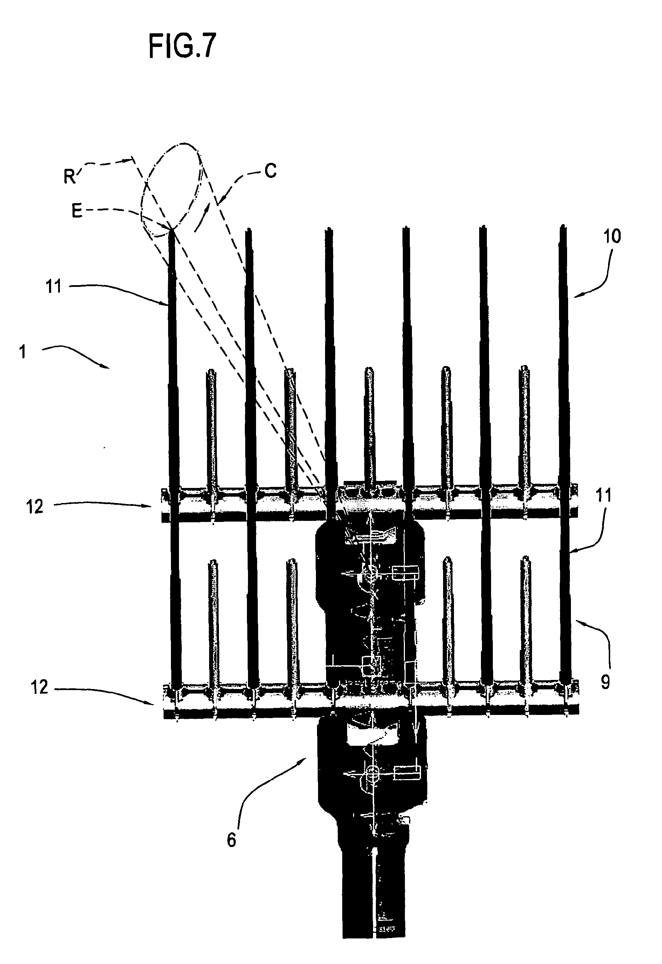

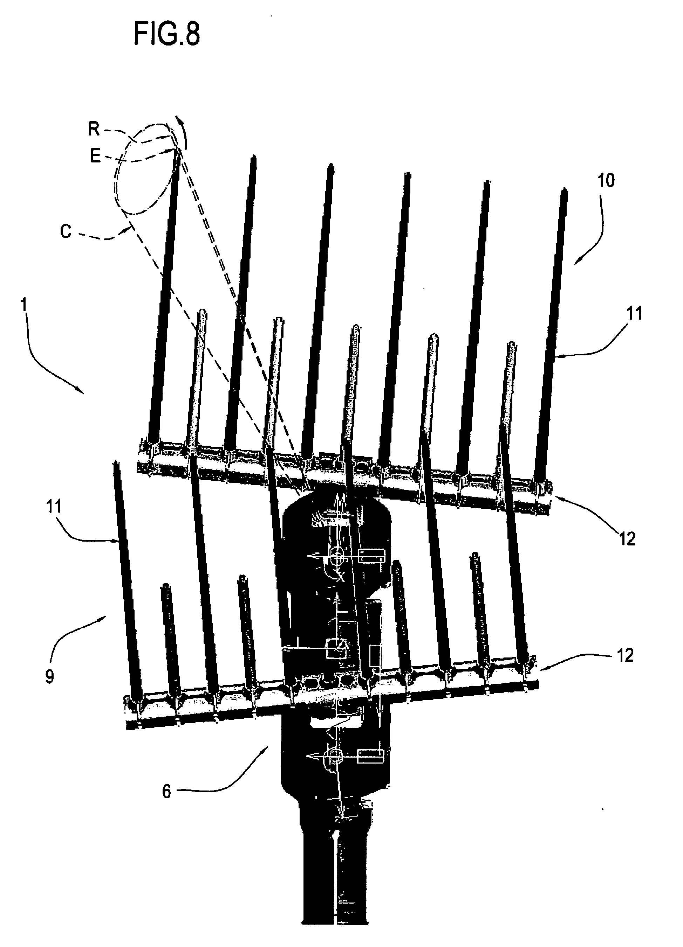

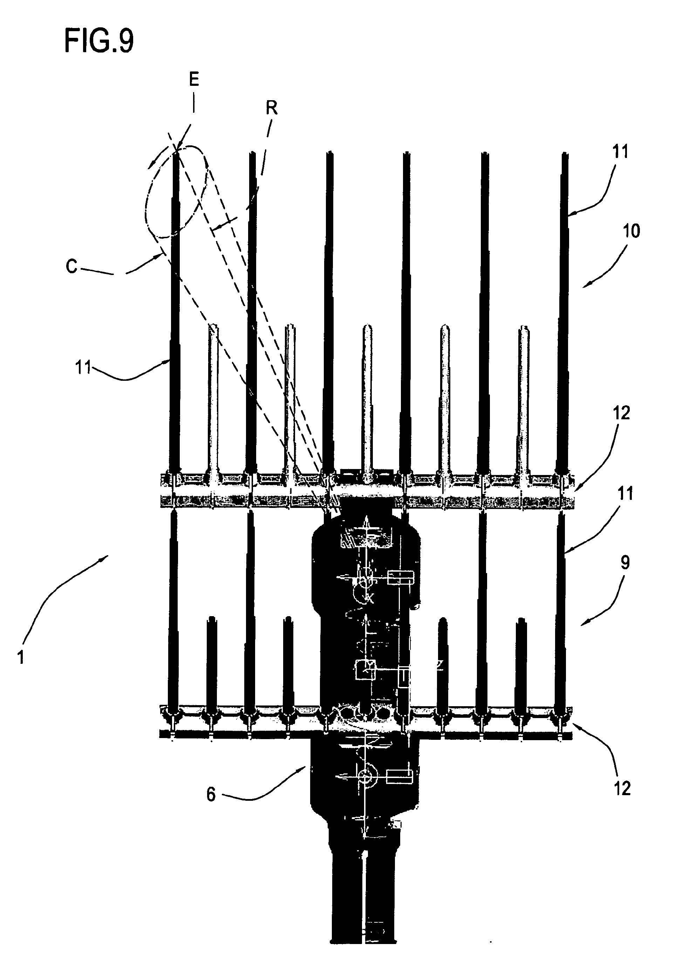

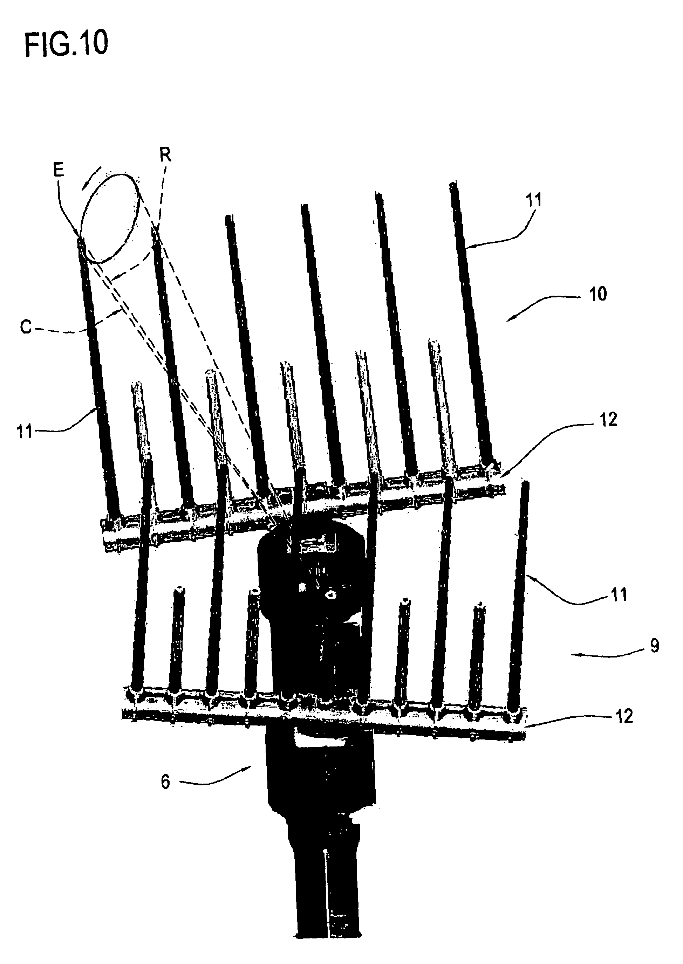

In other words, with reference to Figures 7 to 10, the straight line R passing through any point E of the comb and belonging to the bundle of straight lines with centre P, during the movement of the comb forms the generating line of a cone C with a substantially elliptical base.

For the sake of clarity, Figures 7 to 10 show the substantially elliptical trajectory of a point E positioned at the end of one of the prongs 11 of the furthest comb 10, although said representation obviously illustrates the movement of any point of each of the two combs 9 and 10.

In embodiments of the present invention that are not illustrated, for particular values of the angle α and of the inclination of the comb 9, 10 and/or its respective arm 13, the point E can be given a substantially circular trajectory.

The execution of closed, elliptical or circular trajectories by the combs 9, 10 advantageously avoids the high level continuous accelerations which affect the combs of known harvester devices which move with an oscillating motion and, consequently, allows a reduction of the high level of energy absorption linked with such accelerations.

Advantageously, the two combs 9 and 10 perform reciprocal movements designed to balance the inertia forces generated during the motion, to minimise the vibrations discharged on the operator. In other words, the two support bodies 15 of the two sets of equipment 31 and 32 oscillate about the respective first and second oscillating axes O1, O2 substantially in phase opposition, to at least partly compensate the inertia forces generated in the movement of the support bodies 15.

With regard to this, as is clearly illustrated in Figure 3, the rotary elements 21 of the two sets of equipment 31, 32 are mounted in such a way that the thickest zones of the respective central portions 24 are diametrically opposed relative to the axis of rotation A2. In this way, assuming that the shaft 7 rotates in the direction indicated by the arrow S, whilst the support body 15 of the first set of equipment 31 performs an anti-clockwise rotation about its oscillating axis O2, the support body 15 of the second set of equipment 32 simultaneously performs a clockwise rotation about its oscillating axis O2.

Similarly, with reference to Figure 4, while the support body 15 of the first set of equipment 31 performs an anti-clockwise rotation about its oscillating axis O1, the support body 15 of the second set of equipment 32 simultaneously performs a clockwise rotation about its oscillating axis O1. The invention described may be modified and adapted without thereby departing from the scope of the inventive concept. Moreover, all details of the invention may be substituted by technically equivalent elements.

## Claims

1. A device for harvesting olives, fruit or the like, comprising:
at least one mobile comb (9, 10) designed to engage with the olives,
a support rod (3) for said comb (9, 10), the rod (3) having an end head (6),
a motor for moving the comb (9, 10),
means (36) for transmitting motion from the motor to the comb (9, 10), the device being **characterised in that** the comb (9, 10) oscillates about a first and a second oscillating axis (O1, O2), said axes being perpendicular to one another.

2. The device according to claim 1, **characterised in that** the second oscillating axis (O2) of the comb (9, 10) is fixed relative to the rod (3).

3. The device according to claim 1 or 2, in which the comb (9, 10) is connected to a support body (15), **characterised in that** it comprises an intermediate support element (17) pivoting at the head (6) so as to oscillate about the second axis (O2), the support body (15) pivoting at the intermediate support element (17) so as to oscillate relative to it about the first axis (O1).

4. The device according to claim 3, **characterised in that** the transmission means (36) comprise a rotary element (21) which engages with the support body (15), for moving the support body (15).

5. The device according to claim 4, **characterised in that** the rotary element (21) rotatably engages with the support body (15).

6. The device according to claim 4 or 5, **characterised in that** the rotary element (21) comprises a first, lower portion (22) and a second, upper portion (23) having respective central axes (A2, A3), the central axes (A2, A3) being set at a predetermined angle (α) to one another.

7. The device according to claim 6, **characterised in that** the predetermined angle (α) is between 2° and 10°.

8. The device according to claim 7, **characterised in that** the predetermined angle (α) is approximately 6°.

9. The device according to any of the claims from 6 to 8, **characterised in that** the rotary element (21) comprises a ring-shaped central portion (24) with variable thickness inserted between the first, lower portion (22) and the second, upper portion (23).

10. The device according to claim 9, **characterised in that** the ring-shaped central portion (24) has a first, flat lower face (25) and a second, flat upper face (26), the first and second faces being set at a predetermined angle (α) to one another.

11. The device according to claim 10, **characterised in that** the first, flat lower face (25) is perpendicular to the central axis (A2) of the first, lower portion (22) of the rotary element (21).

12. The device according to claim 10 or 11, **characterised in that** the second, flat upper face (26) is perpendicular to the central axis (A3) of the second, upper portion (23) of the rotary element (21).

13. The device according to any of the claims from 6 to 12, **characterised in that** the rotary element (21) rotates about the central axis (A2) of its first, lower portion (22).

14. The device according to any of the claims from 6 to 13, **characterised in that** the central axis (A2) of the first, lower portion (22), the first and second oscillating axes (O1, O2) intersect with one another at a point (P), said point (P) forming a spherical centre of rotation for the support body (15).

15. The device according to any of the claims from 1 to 14, **characterised in that** it comprises two combs (9, 10), each comb (9, 10) being connected to a respective support body (15).

16. The device according to claim 15, **characterised in that** it comprises two rotary elements (21) each engaging with a respective support body (15).

17. The device according to claim 16, **characterised in that** it comprises a joint (33) kinematically connecting the two rotary elements (21).

18. The device according to any of the claims from 15 to 17, **characterised in that** the two support bodies (15) oscillate about the respective first and second oscillating axes (O1, O2) substantially in phase opposition, to at least partly compensate the inertia forces generated in the movement of the support bodies (15).

19. The device for harvesting olives, fruit or the like, in particular according to any of the claims from 1 to 18, comprising a mobile comb (9, 10) designed to engage with the olives, **characterised in that**, during movement of the comb (9, 10), each point of the comb (9, 10) describes a substantially elliptical trajectory in space.

20. The device according to any of the claims from 1 to 19, **characterised in that** the motor is electric.

21. The device according to any of the claims from 1 to 19, **characterised in that** the motor is of the internal combustion type.

22. The device according to any of the claims from 1 to 19, **characterised in that** the motor is pneumatic.

23. The device according to any of the claims from 1 to 22, **characterised in that** the support rod (3) is telescopic.

## Patentansprüche

1. Erntevorrichtung für Oliven, Früchte oder dergleichen, bestehend aus:
zumindest einem beweglichen Kamm (9, 10), der für den Eingriff mit den Oliven ausgelegt ist,
einer Trägerstange (3) für den Kamm (9, 10), wobei die Stange (3) einen Endkopf (6) aufweist,
einem Motor zur Bewegung des Kamms (9, 10),
Mitteln (36) zur Bewegungsübertragung von dem Motor zu dem Kamm (9, 10), wobei die Vorrichtung **dadurch gekennzeichnet ist, dass** der Kamm (9, 10) oszillierend um eine erste und eine zweite Schwingungsachse (O1, O2) bewegt wird, wobei die genannten Achsen rechtwinklig zueinander stehen.

2. Vorrichtung nach Anspruch 1, **dadurch gekennzeichnet, dass** die zweite Schwingungsachse (O2) des Kamms (9, 10) relativ zur Stange (3) festgelegt ist.

3. Vorrichtung nach Anspruch 1 oder 2, worin der Kamm (9, 10) mit einem Trägerkörper (15) verbunden ist, **dadurch gekennzeichnet, dass** sie ein Zwischenträgerelement (17) beinhaltet, das schwenkbar auf dem Kopf (6) gelagert ist, so dass es sich oszillierend um die zweite Achse (O2) bewegen kann, und dass der Trägerkörper (15) schwenkbar auf dem Zwischenträgerelement (17) gelagert ist, so dass er sich relativ dazu oszillierend um die erste Achse (O1) bewegen kann.

4. Vorrichtung nach Anspruch 3, **dadurch gekennzeichnet, dass** die Übertragungsmittel (36) ein Drehelement (21) beinhalten, das für den Eingriff mit dem Trägerkörper (15) ausgelegt ist, um den Trägerkörper (15) zu bewegen.

5. Vorrichtung nach Anspruch 4, **dadurch gekennzeichnet, dass** das Drehelement (21) drehbar mit dem Trägerkörper (15) eingreift.

6. Vorrichtung nach Anspruch 4 oder 5, **dadurch gekennzeichnet, dass** das Drehelement (21) einen ersten unteren Abschnitt (22) und einen zweiten oberen Abschnitt (23) umfasst, die jeweils Mittelachsen (A2, A3) aufweisen, wobei die Mittelachsen (A2, A3) in einem vorbestimmten Winkel (α) zueinander ausgerichtet sind.

7. Vorrichtung nach Anspruch 6, **dadurch gekennzeichnet, dass** der vorbestimmte Winkel (α) zwischen 2° und 10° beträgt.

8. Vorrichtung nach Anspruch 7, **dadurch gekennzeichnet, dass** der vorbestimmte Winkel (α) etwa 6° beträgt.

9. Vorrichtung nach einem der Ansprüche 6 bis 8, **dadurch gekennzeichnet, dass** das Drehelement (21) einen ringförmigen mittleren Abschnitt (24) mit variabler Dicke beinhaltet, der zwischen dem ersten unteren Abschnitt (22) und dem zweiten oberen Abschnitt (23) eingefügt ist.

10. Vorrichtung nach Anspruch 9, **dadurch gekennzeichnet, dass** der ringförmige mittlere Abschnitt (24) eine erste flache untere Fläche (25) und eine zweite flache obere Fläche (26) aufweist, wobei die erste und zweite Fläche in einem vorbestimmten Winkel (α) zueinander ausgerichtet sind.

11. Vorrichtung nach Anspruch 10, **dadurch gekennzeichnet, dass** die erste flache untere Fläche (25) rechtwinklig zur Mittelachse (A2) des ersten unteren Abschnitts (22) des Drehelements (21) ausgerichtet ist.

12. Vorrichtung nach Anspruch 10 oder 11, **dadurch gekennzeichnet, dass** die zweite flache obere Fläche (26) rechtwinklig zur Mittelachse (A3) des zweiten oberen Abschnitts (23) des Drehelements (21) ausgerichtet ist.

13. Vorrichtung nach einem der Ansprüche 6 bis 12, **dadurch gekennzeichnet, dass** sich das Drehelement (21) um die Mittelachse (A2) seines ersten unteren Abschnitts (22) dreht.

14. Vorrichtung nach einem der Ansprüche 6 bis 13, **dadurch gekennzeichnet, dass** sich die Mittelachse (A2) des ersten unteren Abschnitts (22) und die ersten und zweiten Schwingungsachsen (O1, 02) in einem Punkt (P) schneiden, wobei dieser Punkt (P) einen kugelförmigen Drehmittelpunkt für den Trägerkörper (15) bildet.

15. Vorrichtung nach einem der Ansprüche 1 bis 14, **dadurch gekennzeichnet, dass** sie zwei Kämme (9, 10) beinhaltet, wobei jeder Kamm (9, 10) mit einem entsprechenden Trägerkörper (15) verbunden ist.

16. Vorrichtung nach Anspruch 15, **dadurch gekennzeichnet, dass** sie zwei Drehelemente (21) beinhaltet, die jeweils mit einem entsprechenden Trägerkörper (15) eingreifen.

17. Vorrichtung nach Anspruch 16, **dadurch gekennzeichnet, dass** sie ein Anschlussstück (33) beinhaltet, das die zwei Drehelemente (21) kinematisch verbindet.

18. Vorrichtung nach einem der Ansprüche 15 bis 17, **dadurch gekennzeichnet, dass** sich die zwei Trägerkörper (15) oszillierend um die entsprechenden ersten und zweiten Schwingungsachsen (O1, O2) im Wesentlichen gegenphasig drehen, um zumindest teilweise die bei der Bewegung der Trägerkörper (15) erzeugten Massenkräfte auszugleichen.

19. Erntevorrichtung für Oliven, Früchte oder dergleichen nach einem der Ansprüche 1 bis 18, die einen beweglichen Kamm (9, 10) beinhaltet, der für den Eingriff mit den Oliven ausgelegt ist, **dadurch gekennzeichnet, dass** während der Bewegung des Kamms (9, 10) jeder Punkt des Kamms (9, 10) eine im Wesentlichen elliptische Bahn im Raum beschreibt.

20. Vorrichtung nach einem der Ansprüche 1 bis 19, **dadurch gekennzeichnet, dass** der Motor ein Elektromotor ist.

21. Vorrichtung nach einem der Ansprüche 1 bis 19, **dadurch gekennzeichnet, dass** der Motor ein Verbrennungsmotor ist.

22. Vorrichtung nach einem der Ansprüche 1 bis 19, **dadurch gekennzeichnet, dass** der Motor ein Druckluftmotor ist.

23. Vorrichtung nach einem der Ansprüche 1 bis 22, **dadurch gekennzeichnet, dass** die Trägerstange (3) ausziehbar ist.

## Revendications

1. Un dispositif pour la récolte d'olives, de fruits ou similaires, comprenant :
au moins un peigne mobile (9, 10) destiné à venir en prise avec les olives,
une tige (3) de support dudit peigne (9, 10), la tige (3) présentant une tête d'extrémité (6),
un moteur pour l'actionnement du peigne (9, 10),
des moyens (36) de transmission du mouvement du moteur au peigne (9, 10), le dispositif étant **caractérisé en ce que** le peigne (9, 10) oscille autour d'un premier et d'un deuxième axe d'oscillation (O1, O2), lesdits axes étant perpendiculaires entre eux.

2. Le dispositif selon la revendication 1, **caractérisé en ce que** le deuxième axe d'oscillation (O2) du peigne (9, 10) est fixe par rapport à la tige (3).

3. Le dispositif selon la revendication 1 ou 2, où le peigne (9, 10) est associé à un corps de support (15), **caractérisé en ce qu'**il comprend un élément de support intermédiaire (17) monté de façon pivotante sur la tête (6) de manière à osciller autour du deuxième axe (O2), le corps de support (15) étant monté de façon pivotante sur l'élément de support intermédiaire (17) de manière à osciller par rapport à ce dernier autour du premier axe (O1).

4. Le dispositif selon la revendication 3, **caractérisé en ce que** les moyens de transmission (36) comprennent un élément rotatif (21) qui est en prise avec le corps de support (15) afin de mouvoir le corps de support (15) lui-même.

5. Le dispositif selon la revendication 4, **caractérisé en ce que** l'élément rotatif (21) est en prise rotative avec le corps de support (15).

6. Le dispositif selon la revendication 4 ou 5, **caractérisé en ce que** l'élément rotatif (21) comprend une première partie (22) inférieure et une deuxième partie (23) supérieure ayant des axes centraux (A2, A3) respectifs, lesdits axes centraux (A2, A3) étant inclinés l'un par rapport à l'autre d'un angle (α) prédéfini.

7. Le dispositif selon la revendication 6, **caractérisé en ce que** l'angle (α) prédéfini est compris entre 2° et 10°.

8. Le dispositif selon la revendication 7, **caractérisé en ce que** l'angle (α) prédéfini est égal à 6° environ.

9. Le dispositif selon l'une quelconque des revendications de 6 à 8, **caractérisé en ce que** l'élément rotatif (21) comprend une partie centrale annulaire (24) d'épaisseur variable interposée entre la première partie (22) inférieure et la deuxième partie (23) supérieure.

10. Le dispositif selon la revendication 9, **caractérisé en ce que** la partie centrale annulaire (24) présente une première face plate (25) inférieure et une deuxième face plate (26) supérieure, lesdites première et deuxième faces étant inclinées l'une par rapport à l'autre d'un angle (α) prédéfini.

11. Le dispositif selon la revendication 10, **caractérisé en ce que** la première face plate (25) inférieure est perpendiculaire à l'axe central (A2) de la première partie (22) inférieure de l'élément rotatif (21).

12. Le dispositif selon la revendication 10 ou 11, **caractérisé en ce que** la deuxième face plate (26) supérieure est perpendiculaire à l'axe central (A3) de la deuxième partie (23) supérieure de l'élément rotatif (21).

13. Le dispositif selon l'une quelconque des revendications de 6 à 12, **caractérisé en ce que** l'élément rotatif (21) tourne autour de l'axe central (A2) de sa première partie (22) inférieure.

14. Le dispositif selon l'une quelconque des revendications de 6 à 13, **caractérisé en ce que** l'axe central (A2) de la première partie (22) inférieure et les premier et deuxième axes d'oscillation (O1, O2) se coupent réciproquement en un point (P), ledit point (P) définissant un centre de rotation sphérique pour le corps de support (15).

15. Le dispositif selon l'une quelconque des revendications de 1 à 14, **caractérisé en ce qu'**il comprend deux peignes (9, 10), chaque peigne (9, 10) étant associé à un corps de support (15) respectif.

16. Le dispositif selon la revendication 15, **caractérisé en ce qu'**il comprend deux éléments rotatifs (21) qui sont, chacun, en prise avec un corps de support (15) respectif.

17. Le dispositif selon la revendication 16, **caractérisé en ce qu'**il comprend un joint (33) relié cinématiquement aux deux éléments rotatifs (21).

18. Le dispositif selon l'une quelconque des revendications de 15 à 17, **caractérisé en ce que** les deux corps de support (15) oscillent autour des premier et deuxième axes d'oscillation (O1, O2) respectifs, essentiellement en opposition de phase, afin de compenser au moins en partie les forces d'inertie générées pendant le mouvement des corps de support (15).

19. Le dispositif pour la récolte d'olives, de fruits ou similaires selon l'une quelconque des revendications de 1 à 18, comprenant un peigne mobile (9, 10) destiné à venir en prise avec les olives, **caractérisé en ce que** chaque point du peigne (9, 10), pendant le mouvement du peigne (9, 10) lui-même, décrit dans l'espace une trajectoire essentiellement elliptique.

20. Le dispositif selon l'une quelconque des revendications de 1 à 19, **caractérisé en ce que** le moteur est électrique.

21. Le dispositif selon l'une quelconque des revendications de 1 à 19, **caractérisé en ce que** le moteur est du type à combustion interne.

22. Le dispositif selon l'une quelconque des revendications de 1 à 19, **caractérisé en ce que** le moteur est pneumatique.

23. Le dispositif selon l'une quelconque des revendications de 1 à 22, **caractérisé en ce que** la tige de support (3) est télescopique.
